# EUROPÄISCHE PATENTSCHRIFT

(11) **EP 0 508 950 B1**
(45) Veröffentlichungstag und Bekanntmachung des Hinweises auf die Patenterteilung: **24.09.1997**
(21) Anmeldenummer: 92810229.2
(22) Anmeldetag: 27.03.1992
(51) Int. Cl.: B32B 31/00, B29C 41/36, B05C 11/02, B29C 41/28, B29C 41/32, B29C 67/24, B28B 19/00

(54) **Verfahren zur Herstellung einer schwer entflammbaren bis unbrennbaren Verbundplatte und Vorrichtung zur Durchführung des Verfahrens**
Method and apparatus for producing a composite panel which is barely inflammable to unburnable
Procédé et dispositif pour la fabrication d'un panneau composite difficile à enflammer, voire ininflammable

(30) Priorität: 10.04.1991 CH 1060/91
(43) Veröffentlichungstag der Anmeldung: 14.10.1992
(73) Patentinhaber: Alusuisse Technology & Management AG, 8212 Neuhausen am Rheinfall (CH)
(72) Erfinder: Schlatter, Reinhard, CH-8200 Schaffhausen (CH); Gabi, Urs, CH-8116 Würenlos (CH); Ehrat, Rainer, CH-8207 Schaffhausen (CH)

(56) Entgegenhaltungen:
- EP-A- 0 383 251
- EP-A- 0 423 074
- DE-A- 2 842 858
- FR-A- 1 552 561
- FR-A- 1 582 284
- FR-A- 2 629 117
- US-A- 4 052 958

## Beschreibung

Die Erfindung bezieht sich auf ein Verfahren zur Herstellung einer schwer entflammbaren bis unbrennbaren Verbundplatte mit einem Kern, bestehend aus einer nicht extrudierbaren Kernmischung aus einem schüttfähigen, unbrennbaren Füllmaterial und einem Bindemittel, und beidseits mit dem Kern elastisch verklebten Deckbändern. Weiter betrifft die Erfindung eine Vorrichtung zur Durchführung des Verfahrens.

Es sind Verbundplatten bekannt, bei welchen metallische oder nicht metallische Deckbänder durch vollflächige Verklebung mit Kernschichten vorwiegend anorganischer Natur mit Hilfe eines Bindemittels verbunden sind. Die Kernmaterialien können zwar anorganisch und unbrennbar sein, doch sind sie wegen der fehlenden Elastizität meist nicht in der Lage, die aus mechanischen Beanspruchungen oder aus thermischen Dehnungen der Deckschichten resultierenden Deformationen aufzunehmen. Solche Verbundplatten erleiden daher verhältnismässig oft einen Sprödbruch oder eine Delamination. Weiter sind Verbundplatten mit einer Kernschicht vorwiegend anorganischer Natur meist feuchtigkeitsempfindlich oder wasseraufsaugend, wodurch metallische Deckschichten korrodieren können, insbesondere wenn alkalisch reagierende Substanzen verwendet werden.

Enthalten anorganische Kernmaterialien mineralische Bestandteile hoher Härte oder Asbestfasern, ist eine spanabhebende Bearbeitung nur mit speziellen Werkzeugen möglich. Weiter wird die mechanische Bearbeitung durch die Entwicklung toxikologisch bedenklicher Stäube weiter erschwert.

Materialien mit geringen Anteilen organischer Substanzen, beispielsweise Klebefolien, können nach zahlreichen nationalen Normen in die Klasse der unbrennbaren oder zumindest schwer entflammbaren Baustoffe bzw. Bauteile eingestuft werden.

Kernmaterialien aus rein organischen oder vorwiegend organischen Stoffen dagegen erfüllen die Anforderung der Schwerentflammbarkeit bis Unbrennbarkeit nicht. Bei der Einwirkung von Feuer oder sonstigen hohen Temperaturen werden durch die Zersetzung organischer Bestandteile grosse Mengen brennbarer Gase abgespalten.

Es ist bekannt, die Brennbarkeit organischer Substanzen wie z.B. Kunstharze, durch die Einarbeitung möglichst grosser Mengen von z.B. Aluminiumtrihydroxid stark zu reduzieren. Bei erhöhter Temperatur wird chemisch gebundenes Wasser frei und entfaltet einen wirksamen Löscheffekt.

In der DE-C3-2842858 wird eine Verbundplatte mit zwei Deckblechen und einem Kern aus einer Mischung eines körnigen Füllmaterials und einem üblichen Bindemittel beschrieben, welcher einen hohen Anteil von körnigem Füllstoff, insbesondere von Aluminiumtrihydroxid, und einen geringeren Anteil an Bindemittel enthält. Der Bindemittelgehalt nimmt von den Grenzflächen der Deckbleche nach der Kernmitte zu ab, wodurch in zahlreichen Ländern eine Einstufung in die Klasse von unbrennbaren Bauteilen möglich ist.

Eine Kernmischung mit einem sehr hohen Anteil an anorganischem Füllstoff ist nicht extrudierbar, weshalb die Herstellung entsprechender Verbundplatten taktweise erfolgt. Zuerst wird die untere, mit einem Kleber beschichtete Deckschicht aufgelegt, dann das Kernmaterial eingestreut oder sonstwie aufgetragen. Schliesslich wird die obere, mit einem Kleber beschichtete Deckschicht aufgelegt, und die Verbundplatte durch Erwärmen, Pressen und Abkühlen in die endgültige Form gebracht.

Auch bei sorgfältiger Arbeitsweise entstehen keine gleichmässigen, porenfreien Kleberschichten, was den Korrosionsschutz vermindert. Weiter kommen Anlageteile, welche der Schichtbildung dienen, mit anhaftenden Komponenten in Berührung, wodurch die Schicht unregelmässig ausgebildet wird.

Schliesslich können keine Kleberschichten mit ausreichend hoher Elastizität zur Verbindung von metallischen Deckschichten mit mineralisch harten Kernschichten aufgetragen werden.

Die US 4,052,958 beschreibt eine Vorrichtung zur Kontrolle einer Spaltgrösse, beispielsweise um die Dicke von Extrusionsmassen zu kontrollieren. Diese Vorrichtung ist jedoch nur für Extrusionsmassen und nicht für nur schüttfähiges Füllmaterial geeignet.

Der vorliegenden Erfindung liegt die Aufgabe zugrunde, ein Verfahren und eine Vorrichtung zur Durchführung des Verfahrens der eingangs genannten Art zu schaffen, welche die vorerwähnten Nachteile mindestens teilweise vermeiden und eine wesentlich einfachere und wirtschaftlichere Herstellung von schwer entflammbaren bis unbrennbaren Verbundplatten, mit verbesserten Eigenschaften bezüglich der Verbindung der Deckschichten mit harten Kernschichten, erlauben als die bekannten Verfahren.

In bezug auf das Verfahren wird die Aufgabe erfindungsgemäss durch die kennzeichnenden Merkmale des Anspruchs 1 gelöst. Vorteilhafte Weiterbildungen des erfindungsgemässen Verfahrens sind durch die Merkmale der Ansprüche 2 bis 7 gekennzeichnet.

Das erfindungsgemässe Verfahren erlaubt eine kontinuierliche Herstellung von Verbundplatten mit einer nicht extrudierbaren Kernmischung, was einen grossen Fortschritt bezüglich der Produktivität, aber auch der Qualität darstellt. So können schüttfähige bis schwerfliessende, mehr oder weniger klebrige Kernmischungen aus beispielsweise 60 - 95 Gew.-% anorganischen Füllstoffen von 5 - 40 Gew.-% Bindemittel kontinuierlich auf eine von der unteren Klebefolie gebildete, laufende Fläche gegeben werden.

Die Zugregelung erlaubt die Erzeugung einer konstanten Spannung der Folien und/oder Bänder, was für eine gleichmässige Verbundplattenqualität von wesentlicher Bedeutung ist.

Die Zufuhr der Kernmischung ist vorzugsweise derart geregelt, dass das verbrauchte Material stets durch neues ersetzt wird, und der sich über die ganze Breite erstreckende Schüttkegel konstant bleibt.

Als feuerhemmender, schüttfähiger Füllstoff der Kernmischung, welcher vorzugsweise 60 - 95 Gew.-% ausmacht, eignen sich insbesondere Aluminiumtrihydroxid, Magnesiumhydroxid oder Magnesiumhydratcarbonat, welche beim Erwärmen chemisch gebundenes Wasser und/oder Kohlendioxid abspalten, oder für chlorhaltige Kunststoffe Antimonoxid.

Als organisches Bindemittel, dessen Anteil an der Kernmischung vorzugsweise 5 - 50 Gew.-% beträgt, können sowohl Duroplaste als auch Thermoplaste verwendet werden. Als duroplastische Bindemittel werden vorzugsweise Phenol-, Polyurethan- oder Polyisocyanuratharze eingesetzt, welche eine niedrige Brennbarkeit und Rauchentwicklung haben. Beim Einsatz von thermoplastischen Bindemitteln werden olefinische Copolymere bevorzugt.

Als anorganische Bindemittel können Zementmilch, Gips oder Wasserglas eingesetzt werden. Mit einem anorganischen Bindemittel sind die Verbundplatten mit metallischen Deckbändern trotz der thermoplastischen Klebefolien quasi-unbrennbar.

Als Deckbänder eignen sich in erster Linie Metalle, insbesondere Aluminium oder eine Aluminiumlegierung.

Bei einer besonderen Durchführungsform des erfindungsgemässen Verfahrens nach Anspruch 7 hat die auf der unteren Klebefolie aufgeschüttete Kernmischung einen Schüttwinkel, der unter anderem von der Kornbeschaffenheit und Korngrösse des Füllmaterials und des homogenen eingemischten Bindemittels abhängt. Bei einer Kernmischung mit kleinerem Schüttwinkel oder fliessenden pastösen Eigenschaften wird mit einer kleineren ersten Verdichtung, welche im Keilspalt erfolgt, gearbeitet. Bei einer Kernmischung mit grösserem Schüttwinkel wird auch mit grösserer erster Verdichtung gearbeitet. Die kleinere Verdichtung wird durch einen steileren Einlaufwinkel in den Keilspalt und/oder wenigstens einen kleinen Radius von dessen Begrenzungsfläche/n erzeugt, die grössere Verdichtung mittels eines flacheren Einlaufwinkels in den Keilspalt und/oder wenigstens einen grösseren Radius von dessen Begrenzungsfläche/n. Bei kleinem Einlaufwinkel ist die Klemmgefahr höher, insbesondere bei zähen, klebrigen Massen.

Durch Schwenken des Rakelbalkens bzw. Rakelblatts kann ein der gewünschten Verdichtung der Kernmischung entsprechender Abrundungsradius und/oder mittels der Steigung der entsprechenden Längsseite der Einlaufwinkel β eingestellt werden. Der Rakelbalken bzw. das Rakelblatt und der Rakeltisch sind in jeder Höhen- und Drehposition so fixierbar, dass sie die beim Einziehen der Kernmischung einwirkenden Kräfte nicht zu verschieben vermögen.

Bei der bevorzugten Ausführungsform der Vorrichtung kommt die Kernmischung nach dem Verlassen der Zuführvorrichtung nie mit einem Maschinenteil in direkten Kontakt. Das blattförmige Medium kann z.B. eine Folie oder ein Band aus Kunststoff, Gummi oder Papier, bevorzugt in einer endlos geführten Weise, sein.

In bezug auf die Vorrichtung zur Durchführung des Verfahrens wird die Aufgabe erfindungsgemäss durch die kennzeichnenden Merkmale des Anspruchs 8 gelöst. Vorteilhafte Weiterbildungen der erfindungsgemässen Vorrichtung kennzeichnen die Merkmale der Ansprüche 9 bis 16.

Nach einer bevorzugten Variante sind die ersten Mittel zur Einstellung des Keilspaltes ein drehbarer, in bezug auf den Querschnitt runder, ovaler oder drei- bis sechseckiger Rakelbalken, bei eckigen Querschnitten bevorzugt mit an jeder Ecke in Längsrichtung verlaufendem, unterschiedlichem Abrundungsradius, oder ein drehbares Rakelblatt mit wenigstens einer abgerundeten, schmalen Längsseite.

Mit dem erfindungsgemässen Verfahren und der Vorrichtung zur Durchführung des Verfahrens können kontinuierlich ausgehärtete Kernschichten mit insbesondere metallischen Deckbändern zu alterungs- und witterungsbeständigen Verbundplatten mit einer Klassierung unbrennbar, quasi nicht brennbar oder schwer entflammbar laminiert werden.

Weiter erlauben das Verfahren und die Vorrichtung
- die unübliche gleichzeitige Verarbeitung und Verbindung von thermoplastischen und duroplastischen Schichten zu Schichtverbunden,
- die unübliche Schichtbildung mit ausreichender Dicken- und Dichtekonstanz durch starke Verdichtung, auch Quetschung genannt, einer nicht plastischen Masse in einem durch einen Einlaufwinkel und wenigstens einen Radius definierten Keilspalt,
- die unübliche witterungsbeständige Verbindung zwischen harten unelastischen Kernschichten und relativ elastischen Metallschichten mit höheren linearen Wärmeausdehnungskoeffizienten als die Kernschichten, und
- den Schutz von metallischen Deckbändern vor Korrosion durch allfällige seitlich eindringende Flüssigkeiten mittels einer durch eine Klebefolie gebildeten porenfreien Schicht.

Die Erfindung wird anhand der in der Zeichnung dargestellten Ausführungsbeispiele, welche auch Gegenstand von abhängigen Patentansprüchen sind, näher erläutert. Es zeigen schematisch:
- Fig. 1 eine Ansicht einer Vorrichtung zur kontinuierlichen Herstellung von schwer entflammbaren bis unbrennbaren Verbundplatten,
- Fig. 2 eine Seitenansicht eines Rakelbalkens,
- Fig. 3 eine Seitenansicht eines Rakelblattes
- Fig. 4 einen Querschnitt durch eine Verbundplatte.

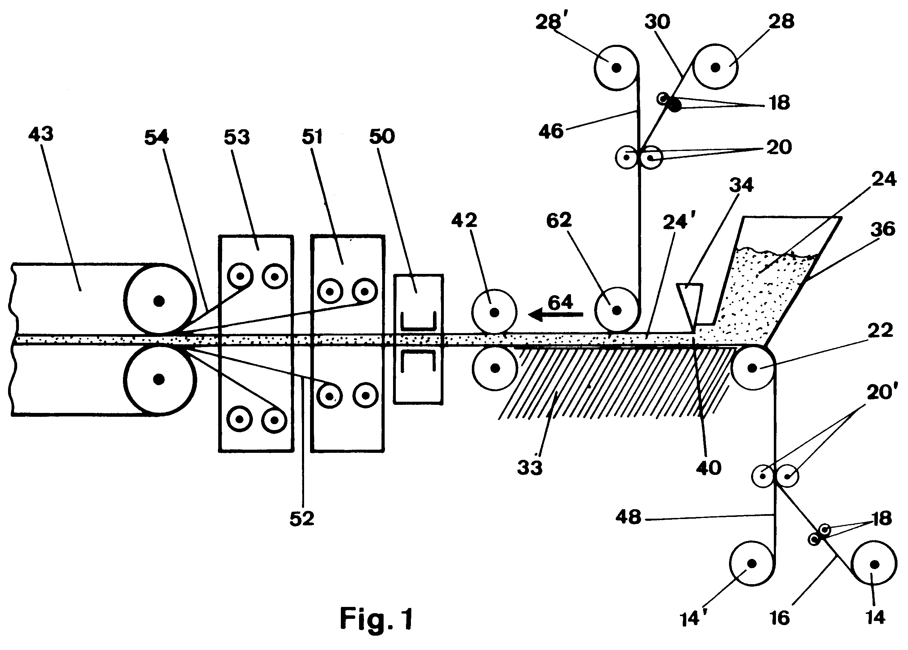

Nach einer bevorzugten Durchführungsform des erfindungsgemässen Verfahrens unter Zugrundelegung der erfindungsgemässen Vorrichtung in der Ausführungsform gemäss Fig. 1 wird von einer unteren Haspel 14 eine untere Klebefolie 16 abgewickelt, über eine Zugregelung 18 und von einer unteren Haspel 14' ein Deckband 48 über ein Kontaktierwalzenpaar 20' und eine Umlenkrolle 22 in etwa horizontaler Lage in den Bereich der Zufuhr der homogenen Kernmischung 24 geführt. In diesem Bereich liegt das untere Deckband 48 mit der kontaktierten unteren Klebefolie 16 auf einem Gleittisch als unterstützendes zweites Mittel 33 auf. Fallweise kann die Umlenkrolle 22 gleichzeitig die zweiten Mittel 33 darstellen.

Eine Dosiervorrichtung 36 entleert kontinuierlich oder in kleinen Portionen Kernmischung 24 auf die untere Klebefolie 16.

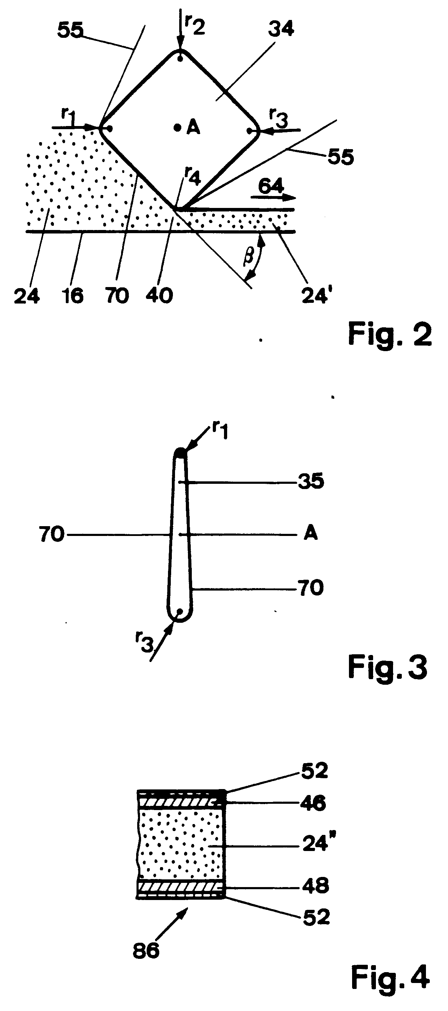

Der Gleittisch und ein Rakelbalken 34 bzw. Rakelblatt 35 begrenzen einen Keilspalt 40, welcher einen kalibrierten Einzug für die Kernmischung 24 definiert. Dies ist in Fig. 2 detailliert dargestellt. Die eigezogene und durch die Kalibrierung geringfügig vorverdichtete Kernmischung 24' wird dann von einem oberen Deckband 46, welches auf der der Kernmischung 24' zugekehrten Seite mit einer oberen Klebefolie 30 kontaktiert ist, beim Passieren einer Umlenkrolle 62 abgedeckt und dabei gegebenenfalls auch weiter verdichtet. Dieses Sandwich durchläuft darauf - gegebenenfalls mit Unterstützung von Zugwalzen 42 - wie in Fig. 1 dargestellt - eine Vorwärmeinrichtung 50 und eine Durchlaufpresse 43 welche unter weiterer Verdichtung des Sandwiches auf das gewünschte Endmass die Verbundplatte 86 entstehen lassen.
Das Zusammenbringen des oberen Deckblattes 46 mit der oberen Klebefolie 30 geschieht nach dem Abwickeln von den Haspeln 28' bzw. 28 und Durchlaufen mindestens einer Zugregelung 18 mit Hilfe eines Kontaktierwalzenpaares 20 in analoger Weise wie bei dem unteren Deckblatt 48 und der unteren Klebefolie 16. Ein Gerüst 51 mit Rollen einer Schutzfolie 52 und ein Gerüst 53 mit Rollen eines Papierbandes 54 kann zum Schutz der Oberfläche der Deckblätter 46, 48 vor der vorzugsweise als Doppelbandpresse ausgestalteten Durchlaufpresse 43 angeordnet sein. Es werden damit Verbundplatten 86 von höchster Oberflächenqualität erreicht. In der Durchlaufpresse 56 wird das Sandwich aus der vorverdichteten Kernmischung 24', den Klebefolien 16, 30, den Deckbändern 46, 48, den Schutzfolien 52 und den Papierbändern 54 gepresst, erwärmt, auf Temperatur gehalten und abgekühlt, wonach die aus der Durchlaufpresse 43 kontinuierlich austretende Verbundplatte 86 beispielsweise mit einer mitlaufenden Schere auf das Endmass abgelängt wird.

Die zwischen den Klebefolien 16, 30, welche im Schüttbereich der Kernmischung 24 noch keine Klebewirkung entfalten, durch den Keilspalt 40 gezogene und gegebenenfalls erstmals vorverdichtete Kernmischung 24' kann zwischen nicht dargestellten Vorverdichterwalzen erstmals bzw. nochmals verdichtet werden, bevor oder nachdem sie durch das obere Deckblatt 46 abgedeckt wird.

Der vorzugsweise schwenk- und höhenverstellbare Gleittisch -vorteilhaft mindestens teilweise quer zur Laufrichtung 64 konvex ausgebildet-als zweites Mittel 33 ist mit rasterförmig angeordneten Druck- und Zugschrauben auf einer Trägerplatte montiert. Mit diesen ebenfalls nicht dargestellten Mitteln kann die vorzugsweise mit Polytetrafluorethylen beschichtete Oberfläche des Gleittischs gegenüber der formfesten Trägerplatte verstellt werden. Damit können Unebenheiten auf der Oberfläche des Gleittischs harmonisch ausgeglichen werden.

Ein im Querschnitt quadratischer, um eine Längsachse A dreh- und höhenverstellbarer Rakelbalken 34 ist in Fig. 2 vergrössert dargestellt. Eine Kunststoffolie als blattförmiges Medium 55 umschlingt den Rakelbalken und gleitet entlang einer den Einlaufwinkel ß bildenden, teflonisierten Seitenfläche 70 des Rakelbalkens 34. Die untere, auf dem in Fig. 2 nicht gezeigten Gleittisch gleitende Folie 16 verläuft horizontal.

Ein ebenfalls um eine Längsachse A dreh- und höhenverstellbares Rakelblatt 35 ist in Fig. 3 dargestellt. Eine der nicht parallel verlaufenden Seitenflächen 70 bildet bei entsprechend Fig. 2 eingesetztem Rakelblatt 35 den Einlaufwinkel β. Dank der nicht parallelen Seitenflächen 70 sind beim Rakelblatt 35 Abrundungen mit unterschiedlichen Radien r₁, r₃, ausgebildet, welche die gleiche Funktion wie die Abrundungen eines Rakelbalkens ausüben.

Selbstverständlich können in Ausführungsvarianten des Rakelblatts die Seitenflächen 70 auch parallel verlaufen und/oder es kann nur eine Abrundung ausgebildet sein.

Ein bevorzugter Rakelbalken 34 ist massiver ausgebildet - z.B. in Gestalt eines Vollkörpers oder eines starkwandigen Hohlprofils - als ein Rakelblatt 35 und kann daher auf ihn ausgeübte Kräfte deformationsfreier aufnehmen.

Aus der Fig. 2 ist ersichtlich, dass die Kernmischung 24′ keine fest eingebauten Anlageteile berührt. Dies trägt wesentlich zur Betriebssicherheit und einer einfachen Wartung der Vorrichtung bei, die klebrige Kernmischung kann sich nicht auf Walzen-, Rollen- oder Rakeloberflächen anlagern.

Eine in Fig. 4 teilweise dargestellte Verbundplatte 86 zeigt den mit zwei Deckbändern 46, 48 verklebten Kern 24'' aus der verdichteten, ausgehärteten ursprünglichen Kernmischung 24. Die Deckbänder 46, 48 sind mit Schutzfolien 52 beschichtet. Die Klebefolien sind als solche nicht mehr sichtbar.

## Patentansprüche

1. Verfahren zur Herstellung einer schwer entflammbaren bis unbrennbaren Verbundplatte (86) mit einem Kern (24''), bestehend aus einer nicht extrudierbaren Kernmischung (24) aus einem schüttfähigen, unbrennbaren Füllmaterial und einem Bindemittel, und beidseits mit dem Kern elastisch verklebten Deckbändern (46, 48),
wobei
zu einer kontinuierlichen Herstellung der Verbundplatte (86) in einem Arbeitsgang die Kernmischung (24) auf ein einlaufendes mit einer unteren, der Kernmischung (24) zugekehrten Klebefolie (16) kontaktiertes unteres Deckband (48) geschüttet und dort ein sich über die ganze Breite der Klebefolie (16) erstreckender Schüttkegel gebildet, beides kontinuierlich und gleichmässig durch einen Keilspalt (40) gezogen, dort erstmals verdichtet und anschliessend auf Dicke kalibriert, eine die vorverdichtete Kernmischung (24') oben begrenzende obere Klebefolie (30) zugeführt, diese mit einem kontinuierlich zugeführten Deckband (46) kontaktiert und das Sandwich unter weiterer Verdichtung gepresst, erwärmt, gekühlt und auf das Endmass der Verbundplatte (86) abgelängt wird.

2. Verfahren nach Anspruch 1, dadurch gekennzeichnet, dass die obere Klebefolie (30) vor der Zuführung mit dem Deckband (46) kontaktiert wird.

3. Verfahren nach Anspruch 1 oder 2, dadurch gekennzeichnet, dass die Kontaktierung durch Kaschierung bewirkt wird.

4. Verfahren nach einem der Ansprüche 1 bis 3, dadurch gekennzeichnet, dass Klebefolien (16, 30) und/oder Deckbänder (46, 48) zur Erzeugung einer konstanten Spannung durch eine Zugregelung (18) geführt werden.

5. Verfahren nach einem der Ansprüche 1 bis 4, dadurch gekennzeichnet, dass die vor dem Keilspalt (40) befindliche Menge der Kernmischung (24) praktisch konstant gehalten wird.

6. Verfahren nach einem der Ansprüche 1 bis 5, dadurch gekennzeichnet, dass eine Kernmischung (24) zugegeben wird, welche aus 60 - 95 Gew.-% anorganischen Füllstoffen und 5 - 40 Gew.-% eines organischen oder anorganischen Bindemittels besteht, vorzugsweise in körniger oder pastöser Form, und Deckbänder (46, 48) aus einem Metall oder einem schwer entflammbaren Kunststoff aufgeklebt werden.

7. Verfahren nach einem der Ansprüche 1 bis 6, dadurch gekennzeichnet, dass, wenn der Keilspalt (40) eine erste Verdichtung bewirkt, bei einer Kernmischung (24) mit kleinem Schüttwinkel oder fliessenden pastösen Eigenschaften mit kleiner erster Verdichtung und bei einer Kernmischung mit grösserem Schüttwinkel mit grösserer erster Verdichtung gearbeitet wird, wobei die kleinere Verdichtung mittels eines steileren Einlaufwinkels (β) und/oder wenigstens eines kleineren Radius (r₁,₂) der Begrenzungsfläche/n des Keilspalts (40) erzeugt wird.

8. Vorrichtung zur Durchführung des Verfahrens nach einem der Ansprüche 1 bis 7, wobei sie in Laufrichtung (64) der Deckbänder (46,48), Haspel (14) mit der unteren Klebefolie (16), Haspel (14') mit dem unteren Deckband (48), ein Kontaktwalzenpaar (20') und Umlenkrolle (22) für das mit der unteren Klebefolie (16) kontaktierte Deckband (48) und eine Einrichtung (36) zum regelmassigen Auftragen der Kernmischung (24) auf die untere Klebefolie (16), erste Mittel zur Bildung eines einstellbaren Einlaufwinkels (ß) und des verstellbaren Keilspaltes (40) der eingezogenen Kernmischung (24), zweite Mittel (33) zum Stützen des unteren mit der Klebefolie (16) kontaktierten unteren Deckbandes (48), mindestens im Bereich des ersten Mittels, und Haspel (28) mit der oberen Klebefolie (30), Haspel (28') mit dem oberen Deckband (46), ein Kontaktwalzenpaar (20) und Umlenkrolle (62) für das mit der Klebefolie (30) kontaktierte Deckband (46) und dritte Mittel (43) zum abschliessenden Pressen und Erwärmen sowie eine Einrichtung zum Ablängen auf Endmass der Verbundplatte (86) umfasst.

9. Vorrichtung nach Anspruch 8, dadurch gekennzeichnet, dass mindestens zwischen den Haspeln (14, 28) der Klebefolien (16, 30) und den Kontaktierwalzenpaaren (20, 20') je eine Zugsregelung (18) angeordnet ist.

10. Vorrichtung nach Anspruch 8 oder 9, dadurch gekennzeichnet, dass die ersten Mittel (23) zur Einstellung des Keilspaltes (40) ein Rakelbalken (34) oder ein Rakelblatt (35) sind.

11. Vorrichtung nach Anspruch 10, dadurch gekennzeichnet, dass sich am Rakelbalken (34) oder am Rakelblatt (35) an der Kontaktzone zur Kernmischung (24) ein fortlaufend bewegtes blattförmiges Medium (55) befindet.

12. Vorrichtung nach einem der Ansprüche 8 bis 11, dadurch gekennzeichnet, dass die zweiten Mittel (33) ein Gleittisch/e, vorzugsweise mit Polytetrafluoräthylen beschichtet, sind.

13. Vorrichtung nach Anspruch 12, dadurch gekennzeichnet, dass der Gleittisch oder die Gleittische mindestens teilweise quer zur Laufrichtung (64) konvex ausgebildet ist/sind.

14. Vorrichtung nach einem der Ansprüche 8 bis 11, dadurch gekennzeichnet, dass die Umlenkrolle (22) gleichzeitig die zweiten Mittel (33) darstellt.

15. Vorrichtung nach einem der Ansprüche 8 bis 14, dadurch gekennzeichnet, dass die dritten Mittel (43) zum abschliessenden Pressen und Erwärmen, vorzugsweise auch zum Halten der Temperatur und Abkühlen, als Durchlaufpresse/n, insbesondere als Doppelbandpresse/n, ausgebildet sind.

16. Vorrichtung nach Anspruch 13, dadurch gekennzeichnet, dass vor dem dritten Mittel (43) eine Vorwärmeinrichtung (50) vorhanden ist.

## Claims

1. Process for the production of a flame-resistant to non-flammable composite panel (86) comprising a core (24''), consisting of a non-extrudable core mixture (24) of a pourable, non-flammable filler and a binder, and skins (46, 48) flexibly bonded to either side of the core, in which, for the continuous production of the composite panel (86) in one step, the core mixture (24) is poured on to an incoming lower skin (48) brought into contact with a lower adhesive film (16) directed towards the core mixture (24), where it forms a pile extending over the entire width of the adhesive film (16), both are drawn continuously and uniformly through a wedge-shaped gap (40) where they are compacted for the first time and then calibrated to thickness, an upper adhesive film (30) delimiting the precompacted core mixture (24') at the top is supplied, the latter is brought into contact with a continuously supplied skin (46) and the sandwich is pressed with further compaction, heated, cooled and cut to the final length of the composite panel (86).

2. Process according to claim 1, characterised in that the upper adhesive film (30) is brought into contact with the skin (46) before it is supplied.

3. Process according to claim 1 or claim 2, characterised in that the contacting is effected by laminating.

4. Process according to one of claims 1 to 3, characterised in that adhesive films (16, 30) and/or skins (46, 48) are guided through a tension regulator (18) in order to generate a constant tension.

5. Process according to one of claims 1 to 4, characterised in that the quantity of the core mixture (24) situated upstream of the wedge-shaped gap (40) is kept virtually constant.

6. Process according to one of claims 1 to 5, characterised in that the core mixture (24) added consists of 60 - 95 % by weight of inorganic fillers and 5 - 40 % by weight of an organic or inorganic binder, preferably in granular or pasty form, and skins (46, 48) of a metal or a flame-resistant plastic are bonded on.

7. Process according to one of claims 1 to 6, characterised in that, if the wedge-shaped gap (40) effects initial compaction, in the case of a core mixture (24) with a small angle of repose or flowing pasty properties, low initial compaction is used and, in the case of a core mixture with a larger angle of repose, higher initial compaction is used, the lower compaction being produced by means of a steeper entry angle (β) and/or at least one smaller radius (r ₁,₂) of the delimiting surface or surfaces of the wedge-shaped gap (40).

8. Device for carrying out the process according to one of claims 1 to 7, including in the feed direction (64) of the skins (46, 48), a reel (14) with the lower adhesive film (16), a reel (14') with the lower skin (48), a contact roll pair (20') and a deflecting roller (22) for the skin (48) brought into contact with the lower adhesive film (16) and an apparatus (36) for the uniform application of the core mixture (24) to the lower adhesive film (16), first means for forming an adjustable entry angle (β) and the adjustable wedge-shaped gap (40) of the core mixture (24) drawn in, second means (33) for supporting the lower skin (48) brought into contact with the adhesive film (16), at least in the region of the first means, and a reel (28) with the upper adhesive film (30), a reel (28') with the upper skin (46), a contact roll pair (20) and a deflecting roller (62) for the skin (46) brought into contact with the adhesive film (30) and third means (43) for final pressing and heating, as well as an apparatus for cutting the composite panel (86) to the final length.

9. Device according to claim 8, characterised in that respective tension regulators (18) are arranged at least between the reels (14, 28) of the adhesive films (16, 30) and the contact roll pairs (20, 20').

10. Device according to claim 8 or claim 9, characterised in that the first means (23) for adjusting the wedge-shaped gap (40) consist of a doctor bar (34) or a doctor blade (35).

11. Device according to claim 10, characterised in that a continuously moving lamellar medium (55) is situated on the doctor bar (34) or on the doctor blade (35) at the contact zone with the core mixture (24).

12. Device according to one of claims 8 to 11, characterised in that the second means (33) consist of a sliding table or tables, preferably coated with polytetrafluoroethylene.

13. Device according to claim 12, characterised in that the sliding table or sliding tables is/are at least partially convex transversely to the feed direction (64).

14. Device according to one of claims 8 to 11, characterised in that the deflecting roller (22) simultaneously constitutes the second means (33).

15. Device according to one of claims 8 to 14, characterised in that the third means (43) for final pressing and heating, preferably also for maintaining the temperature and cooling, are in the form of a continuous press or presses, in particular in the form of a twin-belt press or presses.

16. Device according to claim 13, characterised in that a preheater (50) is provided upstream of the third means (43).

## Revendications

1. Procédé pour fabriquer un panneau composite (86) difficilement inflammable à incombustible, comportant un noyau (24'') constitué par un mélange de noyau (24) non extrudable en un matériau de remplissage incombustible susceptible d'être versé et un liant, et comportant des bandes de recouvrement (46, 48) collées élastiquement des deux côtés avec le noyau, dans lequel, en vue d'une fabrication en continu du panneau composite (86) en une seule opération de travail, le mélange de noyau (24) est déversé sur une bande de recouvrement inférieure (48) entrant et en contact avec un film collant inférieur (16) orienté vers le mélange de noyau (24), et ici se forme un cône de déversement qui s'étend sur toute la largeur du film collant (16), et les deux sont tirés en continu et de façon régulière à travers une fente en coin (40), comprimés une première fois dans celle-ci et ensuite calibrés à l'épaisseur, amenés à un film collant supérieur (30) délimitant le mélange de noyau (24') comprimé préalablement, celui-ci est mis en contact avec une bande de recouvrement (46) amenée en continu, et le sandwich est pressé avec une autre compression, réchauffé, refroidi et mis à la longueur finale du panneau composite (86).

2. Procédé selon la revendication 1, caractérisé en ce que le film collant supérieur (30) est mis en contact avec la bande de recouvrement (46) avant l'amenée.

3. Procédé selon l'une ou l'autre des revendications 1 et 2, caractérisé en ce que le contact est entraîné par placage.

4. Procédé selon l'une quelconque des revendications 1 à 3, caractérisé en ce que des films collants (16, 30) et/ou des bandes de recouvrement (46, 48) sont guidés à travers un réglage de traction (18) pour générer une tension constante.

5. Procédé selon l'une quelconque des revendications 1 à 4, caractérisé en ce que la quantité de mélange de noyau (24) située devant la fente en coin (40) est maintenue pratiquement constante.

6. Procédé selon l'une quelconque des revendications 1 à 5, caractérisé en ce que l'on ajoute un mélange de noyau (24) qui est constitué de 60 à 95 % en poids de matières de remplissage inorganiques et de 5 à 40 % en poids de liant organique ou inorganique, de préférence sous forme granulée ou pâteuse, et en ce que l'on colle des bandes de recouvrement (46, 48) en métal ou en matière plastique difficilement inflammable.

7. Procédé selon l'une quelconque des revendications 1 à 6, caractérisé en ce que, lorsque la fente en coin (40) entraîne une première compression, on opère avec une première compression faible pour un mélange de noyau (24) avec un petit angle de déversement ou des propriétés fluides pâteuses, et avec une première compression plus importante pour un mélange de noyau avec un angle de déversement plus élevé, la compression plus faible étant générée au moyen d'un angle d'entrée plus raide (β) et/ou d'au moins un rayon plus petit (r₁, r₂) de la/des surface(s) de délimitation de la fente en coin (40).

8. Dispositif pour mettre en oeuvre le procédé selon l'une quelconque des revendications 1 à 7, lequel comporte en direction de circulation (64) des bandes de recouvrement (46, 48) un dévidoir (14) présentant le film collant inférieur (16), un dévidoir (14') présentant la bande de recouvrement inférieure (48), une paire de cylindres de contact (20') et un rouleau de renvoi (22) pour la bande de recouvrement (48) mise en contact avec le film collant inférieur (16) et un dispositif (36) pour la déposition régulière du mélange de noyau (24) sur le film collant inférieur (16), des premiers organes pour former un angle d'entrée réglable (β) et une fente en coin réglable (40) du mélange de noyau introduit (24), des seconds organes (33) pour supporter la bande de recouvrement inférieure (48) mise en contact avec le film collant (16), au moins dans la région du premier organe, et un dévidoir (28) comportant le film collant supérieur (30), un dévidoir (28') présentant la bande de recouvrement supérieure (46), une paire de cylindres de contact (20) et un rouleau de renvoi (62) pour la bande de recouvrement (46) mise en contact avec le film collant (30), et des troisièmes organes (43) pour le pressage et le réchauffement finaux, ainsi qu'un dispositif pour mettre à la longueur finale le panneau composite (86).

9. Dispositif selon la revendication 8, caractérisé en ce qu'il est prévu au moins entre les dévidoirs (14, 28) des films collants (16, 30) et les paires de cylindres de contact (20, 20') un réglage de traction respectif (18).

10. Dispositif selon l'une ou l'autre des revendications 8 et 9, caractérisé en ce que les premiers organes (23) pour régler la fente en coin (40) sont une poutre de racloir (34) ou une lame de racloir (35).

11. Dispositif selon la revendication 10, caractérisé en ce qu'un moyen en feuille (55) déplacé en continu se trouve sur la poutre de racloir (34) ou sur la lame de racloir (35) dans la zone de contact avec le mélange de noyau (24).

12. Dispositif selon l'une quelconque des revendications 8 à 11, caractérisé en ce que les seconds organes (33) sont une/des table(s) de coulissement, de préférence revêtue(s) de polytétrafluoroéthylène.

13. Dispositif selon la revendication 12, caractérisé en ce que la table de coulissement ou les tables de coulissement est/sont réalisée(s) de façon convexe au moins en partie transversalement à la direction de circulation (64).

14. Dispositif selon l'une quelconque des revendications 8 à 11, caractérisé en ce que le rouleau de renvoi (22) représente simultanément les seconds organes (33).

15. Dispositif selon l'une quelconque des revendications 8 à 14, caractérisé en ce que les troisièmes organes (43) sont réalisés sous forme de presse(s) continue(s), en particulier sous forme de presse(s) à bande double, pour le pressage et réchauffement finaux, de préférence également pour maintenir la température et pour le refroidissement.

16. Dispositif selon la revendication 13, caractérisé en ce qu'il est prévu un dispositif de préchauffage (50) en avant du troisième organe (43).
